# EUROPEAN PATENT SPECIFICATION

(11) **EP 4 075 039 B1**
(45) Date of publication and mention of the grant of the patent: **05.03.2025**
(21) Application number: 20899067.1
(22) Date of filing: 23.01.2020
(51) Int. Cl.: F16L 11/16, F16L 9/16

(54) **SPIRAL TUBE**
SPIRALROHR
TUBE EN SPIRALE

(30) Priority: 11.12.2019 KR 20190164893
(43) Date of publication of application: 19.10.2022
(73) Proprietor: POSCO, Pohang-si, Gyeongsangbuk-do 37859 (KR)
(72) Inventor: CHO, Woo-Yeon, Incheon 21985 (KR)
(74) Representative: Meissner Bolte Partnerschaft mbB
(86) International application number: PCT/KR2020/001172
(87) International publication number: WO 2021/117977

(56) References cited:
- WO-A1-2017/045426
- WO-A1-2018/104707
- CN-A- 104 266 006
- JP-A- 2015 024 434
- KR-Y1- 200 274 139
- US-A- 2 067 801
- US-A- 308 800
- US-A1- 2016 356 413

## Description

### Technical Field

The present invention relates to a spiral tube capable of improving resistance performance against a collapse load generated by a difference between an internal pressure and an external pressure.

### Background Art

For example, in a high-speed train system, of 300 km/h or more, two resistances must be solved depending on the speed. One is to design an aerodynamic travelling body to reduce air resistance rising exponentially, and the other is to introduce a magnetic levitation system to reduce frictional resistance between the travelling body and a track.

Meanwhile, in a Hyperloop Concept, raised by Elon Musk in 2012 and first introduced by the technical staff of Tesla and SpaceX, a technology that can transport passengers at a maximum speed of 1200 km/h without air resistance by inserting a small travelling body (usually 28 seats) into a vacuum tube sealed at a pressure of approximately 0.001 atm, is proposed. Thereafter, various attempts have been made to actually implement such a system.

In this attempt, while the electromagnetic and mechanical levitation and propulsion systems are important, it is also important to implement a tube structure to maintain a sub-vacuum state of approximately 0.001 atmosphere in infrastructure, accounting for about 50% or more of an initial investment value.

Since the tube is set to be larger than a cross-sectional area of the travelling body since the tube is a passage through which a travelling body a passenger or a cargo moves, in general, a blockage ratio expressed by a cross-sectional area of the travelling body to a blockage ratio of the tube is 0.38 to 0.60.

For example, in the hyperloop concept proposed in 2012, it was shown that when a diameter of the travelling body is 1.38m a blockage ratio is 0.38, but when the diameter of the travelling body is 1.38m, a height at which a person cannot stand up, there may be disadvantages to the passenger's boarding ability. Recently, in approaches such as Virgin Hyperloop One, the diameter of the travelling body is 2.4 m and the diameter of the tube is 3.66 m, which has a trend of enlargement.

There are several mechanical performance requirements for the tube. One thereof is that an outgassing rate must be low to maintain a sub-vacuum of approximately 0.001 atm. For example, the steel material has excellent characteristics such as yield strength and tensile strength, but at about 0.001 atm, the outgassing rate is excellent compared to concrete or polymer composite materials, which are other candidate materials for the tube, so a tube made of steel material is considered first.

As the diameter of the tube increases, a thickness of the tube also increases. For example, according to a pipeline design standard (DNV-OS-F101 standard), for example, when the diameter increases to 4 m, a safety thickness securing the resistance to collapse load along with a safety factor increases to 28.4 mm. Here, if the thickness of the steel is thicker than 25mm, there is a significant restriction on a production method of the tube.

Specifically, a production equipment is set so that the hot-rolled coil of steel has a thickness of 25 mm or less, and steel products having a thickness of 25 mm or more usually have to be manufactured as a thick plate. When manufacturing a tube, a production cost of thick plate products is much higher than that of the continuous process of hot-rolled coils using a method that a continuous process cannot be performed. Therefore, it is necessary to make the thickness of the tube 25 mm or less to enable a continuous process in the manufacture of the tube and to reduce the initial investment cost.

As related prior art, there is an invention disclosed in Republic of Korea Patent Publication No. 1731869 B1

(noticed on May 4, 2017). Furthermore, document WO 2018/104707 discusses the provision of elongated sheets of uniform thickness providing a windable elongate tape element having laterally immobilised wing portions, to increase stability. Documents US 2016/356413 A1 and WO 2017/045426 A1 on the other hand show tubes including flat and plate like stiffeners for stabilization.

### Summary of Invention

### Technical Problem

An aspect of the present disclosure is to provide a spiral tube capable of improving resistance performance against a collapse load generated by a difference between an internal pressure and an external pressure, while having a reduced thickness.

### Solution to Problem

According to the present invention, a spiral tube includes: a tube body in which a strip is connected in a spiral shape and welded at a front end thereof; and a stiffener provided on an inner surface of the tube body, wherein the stiffener has a flat plate shape, characterized in that the stiffener and is joined in a direction, orthogonal to or obliquely to the inner surface of the tube body.

### Advantageous Effects of Invention

As described above, according to the present disclosure, by locating the stiffener in the tube body, resistance performance against a collapse load may be improved, while reducing the thickness of the tube.

### Brief Description of Drawings

FIG. 1 is a perspective view illustrating a portion of a spiral tube according to an embodiment of the present disclosure.
FIG. 2 is a partially enlarged view of the spiral tube illustrated in FIG. 1.
FIG. 3 is a perspective view illustrating a portion of modified examples of a spiral tube according to an embodiment of the present disclosure.
FIG. 4 is a partially enlarged view of the spiral tube shown in FIG. 2.
FIGS. 5A and 5B are views illustrating collapse analysis of the spiral tube according to the prior art and the present disclosure.

### Best Mode for Invention

Since a general pipeline transports pressure fluid, an internal pressure is greater than an external pressure, so an emphasis is on strengthening resistance to bursting rather than a collapse.

For example, in manufacturing of a tube having a diameter of 1m or more, an economical spiral welding method is mainly used as a continuous process of hot-rolled coil.

In the spiral tube produced in this manner, for example, when the diameter is 4 m and the thickness is 28.4 mm, a diameter-to-thickness ratio (D/t) is 130 or more, so that the spiral tube may have a diameter, which is relatively larger compared to a case of the general pipeline (for example, the diameter is 762 mm and the thickness is 20 mm, D/t = 38), and a very thin structure.

As described above, when the diameter-to-thickness ratio (D/t) increases, it is very difficult to control ovality under the influence of its own weight.

A control amount of the ovality of a general pipeline may be, for example, 0.5% or less in the case of a small diameter (diameter < 500 mm, D/t < 30), and in the case of a medium diameter (diameter < 1,300 mm, D/t < 45), the control amount thereof may be controlled to 1.5% or less.

However, in the case of a large diameter of 4 m and a diameter-to-thickness ratio (D/t) of 130, the ovality is expected to be about 5.0%.

In the case of pipelines transporting pressure fluids, a main reason for controlling this ovality is to match connection cross-sections between individual pipes.

Meanwhile, when manufacturing a spiral tube, for example, a hot-rolled coil made of a steel material is stretched and twisted with a strip having a certain width, and welded in a spiral shape at an angle set according to a desired diameter.

The conventional spiral tube is processed to maintain a smooth surface as much as possible, leaving only a weld bead on the inside and outside of the tube by butt welding according to a thickness of the strip. Such a smooth surface is especially for smooth movement of fluids (gas, oil, water, or the like) inside the spiral tube.

On the other hand, the spiral tube according to the present disclosure is intended to be used as a tube in which the travelling body moves at a predetermined distance from the inner surface and has a vacuum thereinside. In the spiral tube, the resistance performance against the collapse load may be sufficiently secured.

Hereinafter, the present disclosure will be described in detail with reference to exemplary drawings. In adding reference numerals to the components of each drawing, it should be noted that the same components are given the same reference numerals as much as possible even though they are indicated on different drawings.

In addition, in describing the present disclosure, if it is determined that a detailed description of a related known configuration or function may obscure the gist of the present disclosure, the detailed description thereof will be omitted.

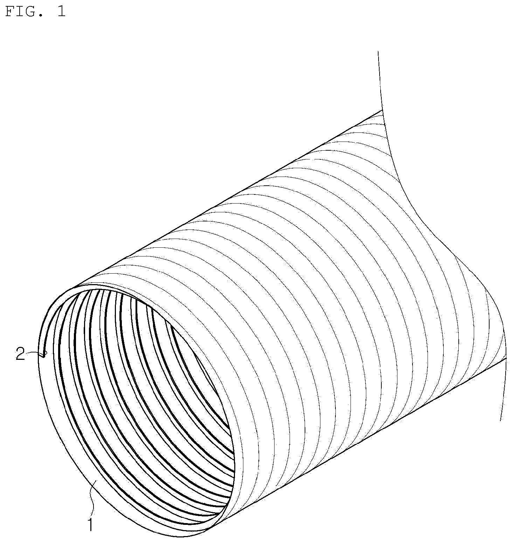

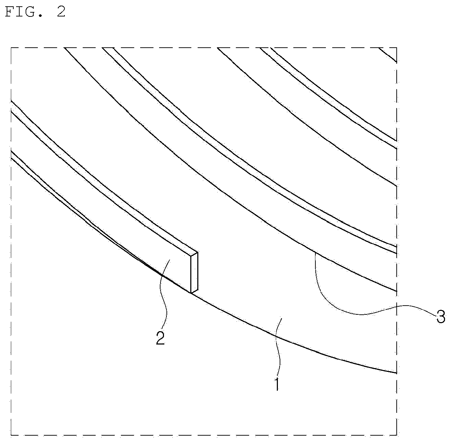

FIG. 1 is a perspective view illustrating a portion of a spiral tube according to an embodiment of the present disclosure, and FIG. 2 is a partially enlarged view of the spiral tube illustrated in FIG. 1.

As illustrated in these drawings, the spiral tube according to an embodiment of the present disclosure includes a tube body 1 in which a strip is connected in a spiral shape and joined at a front end thereof, and a stiffener 2 installed on an inner surface of the tube body.

The tube body 1 is made of, for example, a hot-rolled coil made of a steel material and is welded in a spiral shape at an angle set according to a desired diameter while stretching and twisting a strip having a certain width.

When the strip is metal such as a steel material, the strip may have, for example, yield strength of about 400 MPa and tensile strength of about 440 MPa.

Here, the spiral tube according to an embodiment of the present disclosure does not require a smooth surface on the inside or outside of the tube since the purpose is not to transport a fluid.

The stiffener 2 is joined to the inner surface of the tube body 1 and may be installed to protrude radially inwardly of the tube body.

FIGS. 1 and 2 illustrate, for example, a stiffener 2 in a form of a flat plate having a radial length (that is, a width of the stiffener) of about 100 mm and a thickness of about 8 mm.

However, the dimensions of the stiffener are not necessarily limited thereto, and the width and thickness of the stiffener may be changed according to the diameter of the spiral tube.

The stiffener 2 may be positioned on the welding line 3 when welding while twisting, for example, a strip of hot-rolled coil by a continuous process to form the tube body 1, thereby being coupled to the inside of the tube body in a spiral shape without an additional welding process.

Although the drawings illustrate an example in which the stiffener 2 is positioned in an approximately orthogonal direction on the spiral welding line 3 on an inner side of the tube body 1, it is not necessarily limited thereto.

For example, the stiffener 2 may be located away from the welding line, or may be joined to be slightly inclined with respect to the inner surface of the tube body 1.

In addition, although a continuous process of simultaneously welding the stiffener 2 using the welding wire 3 when forming the tube body 1 has been described above, a process of separately installing the stiffener after manufacturing the tube body may also be performed.

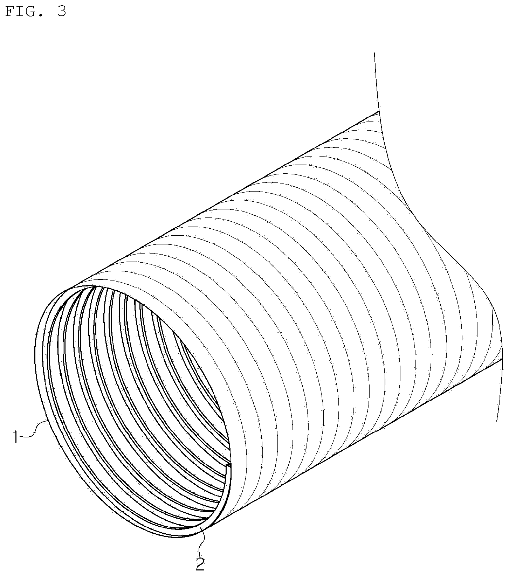

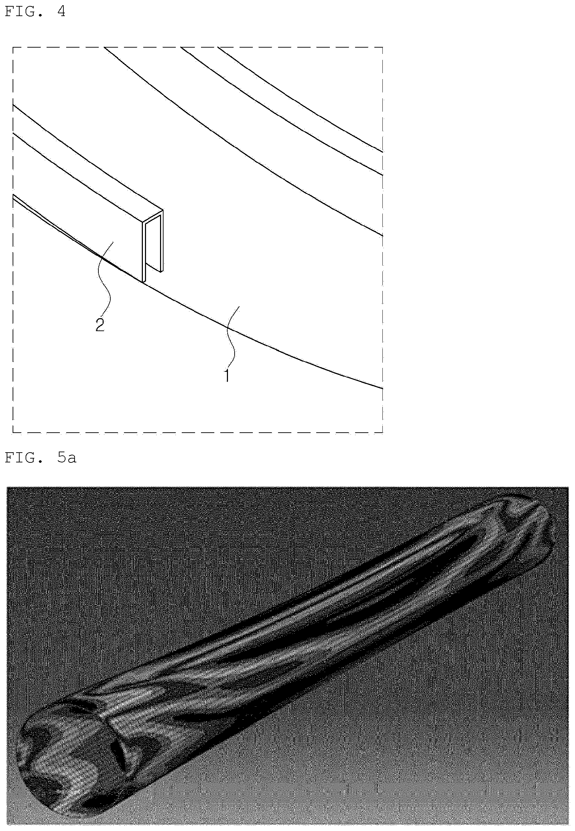

FIG. 3 is a perspective view illustrating a portion of a modified example of a spiral tube according to an embodiment of the present disclosure, and FIG. 4 is a partially enlarged view of the spiral tube illustrated in FIG. 2.

As shown in these figures, in a modified example of the spiral tube according to an embodiment of the present disclosure, a stiffener 2 having a cross-sectional shape such as a bent approximately < shape, a U shape or a curved C shape is employed, so that an effect of reinforcing rigidity of the spiral tube can be further increased.

As described above, the spiral tube according to an embodiment of the present disclosure adopts the stiffener 2 coupled to the inner surface thereof, so that it is possible to safely secure the resistance performance of the spiral tube against the collapse load caused by a pressure difference between an internal pressure, which is almost a vacuum, and an external pressure, which is atmospheric pressure.

In particular, when a diameter increases to 4m in a normal pipeline, a safety thickness securing the resistance performance against the collapse load along with the safety factor increases to 28.4mm, but in the spiral tube according to an embodiment of the present disclosure, the thickness of the tube body 1 can be reduced to 25 mm or less while securing the same performance due to the stiffener 2.

Next, an important factor affecting the resistance performance of the spiral tube against the collapse load is ovality, which is a geometrical characteristic of the tube itself.

For example, when the tube body 1 has a diameter of 4 m, which is a large diameter, and has ovality of about 5.0%, a long axis diameter of the tube body increases by about 100 mm compared to a nominal diameter of 4 m. As a minor axis diameter is reduced by about 100 mm, the tube body may have an elliptical cross-sectional shape.

The eliptical phenomenon may appear when forming the tube body 1, and may be further deteriorated by an external load during transport or construction of the tube body.

In the case of a spiral tube whose inside is maintained in an almost vacuum state, because of this elliptical phenomenon, when external atmospheric pressure acts as a load, collapse tends to occur in a direction of the minor axis diameter, so control of the elliptical phenomenon is required.

As the elliptical phenomenon increases, the resistance performance against the collapse load decreases, so that the spiral tube according to an embodiment of the present disclosure may employ the stiffener 2 coupled to an inner surface thereof when the tube body 1 is formed, thereby safely securing the resistance performance against the collapse load by minimizing the elliptical phenomenon.

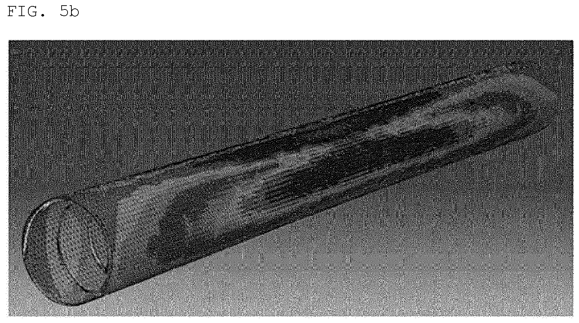

FIGS. 5A and 5B are views illustrating collapse analysis of the spiral tube according to the prior art and the present disclosure.

FIG. 5A illustrates a shape of numerical analysis of a collapse of a spiral tube according to the prior art, the spiral tube of the prior art having a diameter of 4 m, a thickness of 25 mm, and ovality of 5% applied thereto.

In addition, a maximum resistive pressure was 0.17 MPa by applying a steel material having yield strength of 400 MPa and tensile strength of 440 MPa.

However, considering a safety factor of 2.0, it can be seen that the spiral tube according to the prior art cannot resist atmospheric pressure when an inside thereof is almost in a vacuum state and collapses. In other words, if the diameter is 4 m, a tube having a thickness of 25 mm cannot be used, and the thickness of the tube must be further increased.

FIG. 5B illustrates a shape of numerical analysis for a collapse of a spiral tube according to the present disclosure, and the spiral tube of the present disclosure having a diameter of 4 m and a thickness of 25 mm, and ovality of 5% applied thereto.

In addition, the same steel material as that of the spiral tube of the prior art was used.

In the spiral tube according to the present disclosure, a maximum resistance pressure was shown to 0.30 MPa by a stiffener 2 coupled to an inner surface thereof, and when an inside thereof is vacuum even considering a safety factor of 2.0, it can be seen that it resists an external atmospheric pressure, which is 1 atm.

As described above, according to the present disclosure, by locating the stiffener in the tube body, resistance performance against the collapse load may be provided, while reducing the thickness of the tube.

It should be noted that the examples are for illustrative purposes only and are not intended to limit the scope of the present invention The subject of the present invention is disclosed in the appended claims, and those of ordinary skill in the art to which the present invention pertains will have no difficulty in understanding the additional subject of the present invention.

### Industrial Applicability

Accordingly, as described above, the present disclosure is useful for configuring a passage through which a travelling body moves in a high-speed train system or a hyperloop concept.

## Claims

1. A spiral tube comprising, a tube body (1) in which a strip is connected in a spiral shape and welded at a front end thereof; and a stiffener (2) provided on an inner surface of the tube body (1), wherein the stiffener (2) has a flat plate shape having a width and a thickness, **characterized in that** the stiffener (2) is joined with its width extending in a direction, orthogonal to or obliquely to the inner surface of the tube body (1).

2. The spiral tube of claim 2, wherein the stiffener (2) has a cross-sectional shape of a bent or curved shape.

3. The spiral tube of any one of the proceeding claims, wherein a diameter of the tube body (1) is 1m or more, and a thickness thereof exceeds 0 mm and is 25 mm or less.

## Patentansprüche

1. Spiralrohr, umfassend einen Rohrkörper (1), in dem ein Streifen spiralförmig verbunden und an einem vorderen Ende davon verschweißt ist; und eine Versteifung (2), die an einer Innenfläche des Rohrkörpers (1) bereitgestellt ist, wobei die Versteifung (2) eine flache Plattenform mit einer Breite und einer Dicke aufweist, **dadurch gekennzeichnet, dass** die Versteifung (2) mit ihrer Breite verbunden ist, die sich in einer Richtung erstreckt, die orthogonal oder schräg zu der Innenfläche des Rohrkörpers (1) verläuft.

2. Spiralrohr nach Anspruch 2, wobei die Versteifung (2) eine Querschnittsform einer gebogenen oder gekrümmten Form aufweist.

3. Spiralrohr nach einem der vorhergehenden Ansprüche, wobei ein Durchmesser des Rohrkörpers (1) 1 m oder mehr beträgt und eine Dicke davon 0 mm überschreitet und 25 mm oder weniger beträgt.

## Revendications

1. Tube en spirale comprenant un corps de tube (1) dans lequel une bande est reliée en forme de spirale et soudée à une extrémité avant de celle-ci ; et un raidisseur (2) prévu sur une surface interne du corps de tube (1), dans lequel le raidisseur (2) a une forme de plaque plate ayant une largeur et une épaisseur, **caractérisé en ce que**
le raidisseur (2) est joint avec sa largeur s'étendant dans une direction, orthogonale ou oblique à la surface interne du corps de tube (1).

2. Tube en spirale selon la revendication 2, dans lequel le raidisseur (2) a une forme en coupe d'une forme courbée ou incurvée.

3. Tube en spirale selon l'une quelconque des revendications précédentes, dans lequel un diamètre du corps de tube (1) est de 1 m ou plus, et une épaisseur de celui-ci dépasse 0 mm et est de 25 mm ou moins.
